(19) Europäisches Patentamt
European Patent Office
Office européen des brevets

(11) EP 4 428 950 A1

(12) EUROPEAN PATENT APPLICATION

(43) Date of publication:
**11.09.2024 Bulletin 2024/37**

(21) Application number: **23219763.2**

(22) Date of filing: **22.12.2023**

(51) International Patent Classification (IPC):
***H01M 4/36*** *(2006.01)* ***H01M 4/587*** *(2010.01)*
***H01M 4/62*** *(2006.01)*

(52) Cooperative Patent Classification (CPC):
**H01M 4/366; H01M 4/0404; H01M 4/133; H01M 4/134; H01M 4/1395; H01M 4/364; H01M 4/386; H01M 4/583; H01M 4/587; H01M 4/62; H01M 4/625; H01M 10/0525;**
H01M 2004/021; H01M 2004/027; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.12.2022 KR 20220191142**

(71) Applicant: **Samsung SDI Co., Ltd.**
**Yongin-si, Gyeonggi-do 17084 (KR)**

(72) Inventors:
- **OH, Seyoung**
  **17084 Yongin-si (KR)**
- **CHA, Yurim**
  **17084 Yongin-si (KR)**
- **CHO, Yungu**
  **17084 Yongin-si (KR)**
- **KANG, Eunji**
  **17084 Yongin-si (KR)**

(74) Representative: **Marks & Clerk LLP**
**15 Fetter Lane**
**London EC4A 1BW (GB)**

(54) **NEGATIVE ACTIVE MATERIAL COMPOSITE FOR RECHARGEABLE LITHIUM BATTERY, METHOD OF MANUFACTURING THE SAME, NEGATIVE ELECTRODE INCLUDING THE SAME AND RECHARGEABLE LITHIUM BATTERY INCLUDING THE SAME**

(57) A negative electrode active material composite, a method of manufacturing the same, a negative electrode including the same, and a rechargeable lithium battery are described. The negative electrode active material composite includes secondary particles in which artificial graphite primary particles are assembled; and a conductive material in internal gaps of the secondary particles; wherein at least some of the artificial graphite primary particles include an amorphous carbon coating layer on a surface thereof.

FIG. 1

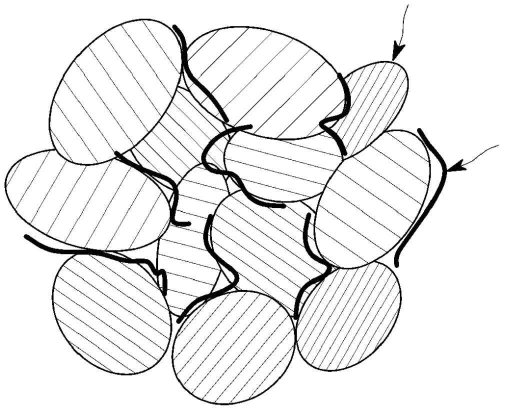


EP 4 428 950 A1

## Description

BACKGROUND

1. Field

Embodiments relate to negative electrode active material composites, methods of manufacturing the same, negative electrodes including the same, and rechargeable lithium batteries.

2. Description of the Related Art

Rechargeable lithium batteries are in the spotlight as power sources for driving medium to large devices such as hybrid vehicles and battery vehicles as well as small devices such as mobile phones, notebook computers, and smart phones.

As a negative electrode active material for a rechargeable lithium battery, various types of carbon negative electrode active materials including artificial graphite, natural graphite, hard carbon, or the like capable of intercalating/deintercalating lithium are widely used. Recently, research on non-carbon negative electrode active materials such as silicon and tin to obtain higher capacity is being actively conducted.

SUMMARY

The embodiments may be realized by providing a negative electrode active material composite including secondary particles in which artificial graphite primary particles are assembled; and a conductive material (e.g. a conductive material different from artificial graphite) in internal gaps of the secondary particles, wherein at least some of the artificial graphite primary particles include an amorphous carbon coating layer on a surface thereof.

The negative electrode active material composite may be manufactured by assembling artificial graphite primary particles in the presence of a conductive material and an amorphous carbon precursor, and forming the amorphous carbon coating layer from the amorphous carbon precursor.

The negative electrode active material composite may have a theoretical capacity of about 330 to about 400 mAh/g.

The negative electrode active material composite may have an interplanar spacing of the (002) plane of about 3.35 Å to about 3.8 Å, when measured by XRD.

The negative electrode active material composite may have a tap density of about 0.7 to about 1.5 g/cc.

The negative electrode active material composite may have a pellet density of about 1.35 to about 2.0 g/cc, after press molding under a pressure of 2 tons.

The negative electrode active material composite may have an average particle diameter ($D_{50}$) of about 5 μm to about 50 μm.

The artificial graphite primary particles may be prepared from a petroleum raw material, a coal raw material, a resin raw material, or a combination thereof.

The conductive material may include carbon nanotubes (CNT), graphene, denka black, ketjen black, acetylene black, carbon black, or a mixture thereof.

The amorphous carbon coating layer may include soft carbon, hard carbon, a mesophase pitch carbonized product, calcined coke, or a combination thereof.

The negative electrode active material composite may include greater than about 0 wt% and less than or equal to about 0.5 wt% of the conductive material, and/or greater than about 0 wt% and less than or equal to about 5 wt% of the amorphous carbon coating layer, all wt% being based on a total weight of the negative electrode active material composite.

The negative electrode active material composite may further include a silicon negative electrode active material.

The silicon negative electrode active material may be included in an amount of greater than about 0 wt% and less than or equal to about 30 wt%, based on a total weight of the negative electrode active material composite.

The embodiments may be realized by providing a method for manufacturing a negative electrode active material composite, the method including assembling artificial graphite primary particles in the presence of a conductive material (e.g. a conductive material different from artificial graphite) and an amorphous carbon precursor to obtain a product; and carbonizing the product.

The method may further include manufacturing the artificial graphite primary particles prior to assembling the artificial graphite primary particles, wherein the artificial graphite primary particles are manufactured by heat treatment of a petroleum raw material, a coal raw material, a resin raw material, or a combination thereof.

Assembling the artificial graphite primary particles may be performed at a temperature of about 100 °C to about

500 °C.

The carbonizing may be performed at a temperature of about 800 °C to about 1,400 °C.

The embodiments may be realized by providing a negative electrode for a rechargeable lithium battery, the negative electrode including a current collector; and a negative electrode active material layer on the current collector, wherein the negative electrode active material layer includes the negative electrode active material composite according to an embodiment.

The negative electrode active material layer may further include a conductive material, binder, a negative electrode active material that is different from the negative electrode active material composite, or a combination thereof.

The embodiments may be realized by providing a rechargeable lithium battery including the negative electrode according to an embodiment; a positive electrode; and an electrolyte.

At least some of the above and other features of the invention are set out in the claims.

BRIEF DESCRIPTION OF THE DRAWINGS

Features will be apparent to those of skill in the art by describing in detail example embodiments with reference to the attached drawings in which:

FIGS. 1 and 2 are schematic views of negative electrode active material composites according to some example embodiments, respectively.
FIG. 3 is a perspective view of a rechargeable lithium battery according to some example embodiments.
FIG. 4 is a SEM image of the negative electrode active material composite of Example 1.
FIG. 5 is a SEM image of the negative electrode active material composite of Comparative Example 1.
FIG. 6 is a SEM image of the negative electrode active material composite of Comparative Example 2.
FIG. 7 is a SEM image of the negative electrode active material composite of Comparative Example 3.

DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In addition, it will also be understood that when a layer is referred to as being "between" two layers, it can be the only layer between the two layers, or one or more intervening layers may also be present. Like reference numerals refer to like elements throughout. As used herein, the term "or" is not necessarily an exclusive term, e.g., "A or B" would include A, B, or A and B.

The terminology used herein is used to describe embodiments only, and is not intended to limit the present disclosure. The singular expression includes the plural expression unless the context clearly dictates otherwise.

As used herein, "a combination thereof" refers to a mixture, a laminate, a composite, a copolymer, an alloy, a blend, a reaction product, and the like of constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., may be exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

"Particle" or "single particle" means a particle that is not assembled with other particles, and "secondary particle" means a form that behaves like a single particle as a result of the assembly of the "particle" or "single particle."

In addition, "layer" herein includes not only a shape formed on the whole surface if/when viewed from a plan view, but also a shape formed on a partial surface.

In addition, "particle diameter" or "average particle diameter" may be measured by a suitable method, e.g., may be measured by a particle size analyzer, or may be measured by a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter ($D_{50}$) of particles having a cumulative volume of about 50 volume% in the particle size distribution.

"Thickness" may be measured through a picture taken with an optical microscope such as a scanning electron

microscope.

As used herein, the term "soft carbon" refers to graphitizable carbon materials and are readily graphitized by heat treatment at a high temperature, e.g., 2800 °C, and "hard carbon" refers to non-graphitizable carbon materials and are slightly graphitized by heat treatment.

Negative Electrode Active Material Composite

In an implementation, a negative electrode active material composite may include secondary particles in which artificial graphite single (e.g., primary) particles are assembled, and a conductive material (e.g. a conductive material different from artificial graphite) in internal gaps of the secondary particles. In an implementation, an amorphous carbon coating layer may be on a surface of at least a portion (e.g., some) or all of the artificial graphite single particles.

A mixture of graphite and silicon could be used to secure long-term cycle-life characteristics by suppressing a volume change of a non-carbon negative electrode active material (silicon, tin, or the like), while improving low capacity of a carbon negative electrode active material (artificial graphite, natural graphite, hard carbon, or the like).

Even though the graphite and silicon mixture are used, there could still a limitation in suppressing the volume change of silicon, causing a sharp drop in an initial cycle-life of a rechargeable lithium battery. If the volume change of silicon were to occur during the initial driving process of the rechargeable lithium battery, a contact area of a negative electrode active material layer including the graphite and silicon mixture with a negative current collector could be reduced, (i.e., the negative electrode active material layer could be detached from the negative current collector), deteriorating discharge capacity of the rechargeable lithium battery.

In order to address this issue of using the graphite and silicon mixture, methods of increasing contents of a binder, a conductive material, and the like in a negative electrode has been considered. These methods may increase a price of the negative electrode active material or deteriorate initial efficiency or cycle-life of the rechargeable lithium battery. As such, the initial efficiency and long-term cycle-life of the rechargeable lithium battery may have a trade-off relationship with the capacity, it could be very difficult to increase them in balance.

FIGS. 1 and 2 are schematic views of negative electrode active material composites according to some example embodiments, respectively. As shown in FIGS. 1 and 2, the negative electrode active material composite of some example embodiments may include secondary particles (in which artificial graphite single particles are assembled) and a conductive material (e.g. a conductive material different from artificial graphite) between the artificial graphite single particles constituting the secondary particles (i.e., the internal gap of the secondary particles) In an implementation, a portion or all of the artificial graphite single particles constituting the secondary particles may have surfaces coated with amorphous carbon (e.g., particles indicated by different hatched lines in the drawing). In an implementation, as shown in FIG. 2, the negative electrode active material composite may further include a silicon negative electrode active material, which may also be present in the internal gaps of the secondary particles.

The negative electrode active material composite according to some example embodiments may be a carbon negative electrode active material based on the secondary particles in which the artificial graphite single particles are assembled and thus may help prevent a sharp drop in an initial cycle-life of the rechargeable lithium battery, while securing the long-term cycle-life characteristics.

The negative electrode active material composite according to some example embodiments may help increase the initial efficiency of the rechargeable lithium battery as well as help improve a conductive network of the negative electrode by embedding the conductive material in internal gaps of the secondary particles (i.e., spaces among the artificial graphite single particles differing one another). In an implementation, the conductive material may be included in the negative electrode active material composite, and there may be an effect of increasing polydispersity of the conductive material in the negative electrode, even though the conductive material may not be separately used, or a content of the conductive material may be reduced during manufacturing of the negative electrode, realizing a sufficient conductive effect.

In an implementation, the negative electrode active material composite may be prepared by coating the amorphous carbon on the surfaces of a portion or all of the artificial graphite single particles to help improve adhesion of the artificial graphite single particles themselves, to help improve adhesion of the artificial graphite single particles with the conductive material, to help improve adhesion between the negative electrode active material composite and the negative current collector, and the like. Accordingly, a reduction of the contact area of the negative electrode active material layer including the negative electrode active material composite of some example embodiments with the negative current collector during the initial driving process of the rechargeable lithium battery may be suppressed, ultimately preventing the sharp drop in an initial cycle-life of the rechargeable lithium battery.

Therefore, the negative electrode active material composite of some example embodiments may not only help prevent the sharp drop in an initial cycle-life of the rechargeable lithium battery but may also simultaneously secure initial discharge capacity, a charging rate, a long-term cycle-life, and the like.

Hereinafter, the negative electrode active material composite of the embodiment is described in detail.

Method of Manufacturing Negative Electrode Active Material Composite

The negative electrode active material composite may be manufactured by mixing secondary particles (in which artificial graphite single particles are assembled) and a conductive material (e.g. a conductive material different from artificial graphite) in the presence of an amorphous carbon precursor, and forming the amorphous carbon from the amorphous carbon precursor.

As will be described in more detail below, the negative electrode active material composite may be formed by assembling artificial graphite single particles in the presence of a conductive material (e.g. a conductive material different from artificial graphite) and an amorphous carbon precursor, and then carbonizing the product obtained in the assembling step.

In the assembling step, artificial graphite single particles may be assembled to form secondary particles, the conductive material may be embedded in the internal gaps of the secondary particles, and the amorphous carbon precursor may be coated on surfaces of a portion or all of the artificial graphite single particles constituting the secondary particles. By carbonizing the product of the assembling step, the amorphous carbon may be formed from the amorphous carbon precursor.

This is different from graphitizing natural graphite particles after mixing the spherical natural graphite particles with the amorphous carbon precursor, and the conductive material and then, firing the mixture. The carbonization and the firing may be performed at about 1,000 °C, which may just convert the amorphous carbon precursor into the amorphous carbon, and the graphitization and the firing may be performed at about 3000 °C, which may decompose the converted amorphous carbon. Accordingly, performing graphitization and the firing after mixing the spherical natural graphite particles, the amorphous carbon precursor, and the conductive material may fail to manufacture the negative electrode active material composite of some example embodiments.

Secondary Particles in which Artificial Graphite Single Particles are Assembled

In the negative electrode active material composite according to some example embodiments, the secondary particle in which the artificial graphite single particles are assembled may be a component that contributes to securing a long-term cycle-life characteristic while preventing a sharp drop in the cycle-life of the rechargeable lithium battery.

Hereinafter, artificial graphite single particles of the secondary particles in a state in which the internal gaps are not yet embedded with the conductive material will be described in detail.

The artificial graphite single particles may have a theoretical capacity of about 330 mAh/g to about 365 mAh/g. In an implementation, the artificial graphite single particle may have a theoretical capacity of greater than or equal to about 330 mAh/g, greater than or equal to about 335mAh/g, or greater than or equal to about 340 mAh/g and less than or equal to about 365 mAh/g, less than or equal to about 360 mAh/g, or less than or equal to about 355mAh/g. If artificial graphite single particles satisfying this range are used, it is possible to secure long-term cycle-life characteristics while preventing a sharp drop in the cycle-life of a rechargeable lithium battery.

The artificial graphite single particles may have an interplanar spacing d002 of the (002) plane of about 3.355 Å to about 3.361 Å, when measured by XRD. In an implementation, the artificial graphite single particles may have an interplanar spacing d002 of the (002) plane of greater than or equal to about 3.355 Å, greater than or equal to about 3.356 Å or greater than or equal to about 3.357 Å and less than or equal to about 3.361 Å, less than or equal to about 3.360 Å, or less than or equal to about 3.359 Å. If artificial graphite single particles satisfying this range are used, it may be possible to secure long-term cycle-life characteristics while preventing a sharp drop in the cycle-life of a rechargeable lithium battery.

The artificial graphite single particles may have a pellet density of about 1.35 g/cc to about 2.0 g/cc, when press molding under a pressure of 2 tons. In an implementation, the artificial graphite single particles may have a pellet density of greater than or equal to about 1.35 g/cc, greater than or equal to about 1.40 g/cc, or greater than or equal to about 1.45 g/cc and less than or equal to about 2.0 g/cc, less than or equal to about 1.95 g/cc, or less than or equal to about 1.90 g/cc. If artificial graphite single particles satisfying this range are used, it may be possible to secure long-term cycle-life characteristics while preventing a sharp drop in the cycle-life of a rechargeable lithium battery.

The artificial graphite single particle may have an average particle diameter ($D_{50}$) of about 5 μm to about 11 μm. In an implementation, the artificial graphite single particles may have an average particle diameter ($D_{50}$) of greater than or equal to about 5 μm, greater than or equal to about 5.5 μm, or greater than or equal to about 6 μm and less than or equal to about 11 μm, less than or equal to about 10.5 μm, or less than or equal to about 10 μm. If artificial graphite single particles satisfying this range are used, it is possible to secure long-term cycle-life characteristics while preventing a sharp drop in the cycle-life of a rechargeable lithium battery.

The artificial graphite single particles may be a commercially available product having interplanar spacing d002, pellet density, and average particle diameter ($D_{50}$) satisfying each of the aforementioned ranges, or may be directly manufactured and used so as to satisfy each of the above ranges. In the latter case, the artificial graphite single particles

may be manufactured and used from a petroleum raw material, a coal raw material, a resin raw material, or a combination thereof, and a detailed manufacturing process thereof will be described below.

Conductive Material

In the negative electrode active material composite of some example embodiments, the conductive material may correspond to a component that helps improve the initial efficiency of the rechargeable lithium battery while improving a conductive network of the negative electrode by embedding the internal gaps of the secondary particles.

The conductive material may be different from artificial graphite (e.g. the artificial graphite used in the artificial graphite primary particles). In an implementation, the conductive material may include, e.g., carbon nanotube (CNT), graphene, denka black, ketjen black, acetylene black, carbon black, or a mixture thereof. In an implementation, the conductive material may include, e.g. carbon nanotube (CNT), graphene, denka black, or a mixture thereof. In an implementation, as illustrated in the drawings, the shape of the conductive material may be a linear shape, or the shape of the conductive material may be a point shape, an irregular shape, a spherical shape, an elliptical shape, a rectangle shape, a square shape, or a combination thereof.

Amorphous Carbon

In the negative electrode active material composite of some example embodiments, the amorphous carbon may be a component that coats the surfaces of a portion or all of the artificial graphite single particles to help improve adhesion between the artificial graphite single particles and between the artificial graphite single particles and the conductive material, and adhesion between the negative electrode active material composite and the negative electrode current collector, and to help prevent a sharp drop in the initial cycle-life of a rechargeable lithium battery.

The amorphous carbon may include, e.g., soft carbon, hard carbon, a mesophase pitch carbonized product, calcined coke, or a combination thereof. Compared to crystalline carbon, the amorphous carbon may effectively penetrate into the secondary particle gap during the heat treatment process to reduce internal pores, thereby improving conductivity and effectively suppressing side reactions in the electrolyte solution.

The crystalline carbon and the amorphous carbon may be distinguished through XRD measurement. Natural graphite, a type of crystalline carbon, may be manufactured by reprocessing a mineral made by growing crystals under heat and pressure over a long period of time, and if (e.g., when) measured by XRD, the interplanar spacing (d 002) of the (002) plane may be 3.350 Å to 3.360 Å. Artificial graphite, which is another type of crystalline carbon, may be manufactured by graphitization, and if (e.g., when) measured by XRD, the interplanar spacing (d 002) of the (002) plane may be 3.355 Å to 3.365 Å. Meanwhile, the amorphous carbon may be a material made of carbon excluding natural graphite and artificial graphite, and if (e.g., when) measured by XRD, the interplanar spacing (d 002) of the (002) plane may be 3.34 Å or less.

The XRD may be measured using equipment that uses CuK$\alpha$ radiation as a target line (e.g., product name: X'Pert, manufacturer: Malvern Panalytical). The XRD measurement conditions may be 2$\theta$ of 10° to 80°, scan speed (°/S) of 0.044 to 0.089, and step size (°/step) of 0.013 to 0.039, and peak intensity resolution (Peak intensity), and a monochromator device may be removed to improve resolution.

The amorphous carbon may have a thickness of about 1 nm to about 900 nm, e.g., about 5 nm to about 800 nm, on the surface of the artificial graphite particles. Within this range, it is possible to control the internal pore size and volume of the negative electrode active material composite, control a degree of penetration of the electrolyte solution into the negative electrode active material composite, and minimize side reactions between the electrolyte solution and the negative electrode active material composite, thereby improving cycle-life characteristics of the rechargeable lithium battery.

Silicon Negative Electrode Active Material

In an implementation, the negative electrode active material composite may further include a silicon negative electrode active material. In this case, the negative electrode active material composite of some example embodiments may exhibit a higher theoretical capacity. In an implementation, the negative electrode active material composite further including the silicon negative electrode active material may have a theoretical capacity of, e.g., about 350 mAh/g to about 400 mAh/g, about 355 mAh/g to about 390 mAh/g, or about 360 to about 380 mAh/g.

The silicon negative electrode active material may include silicon (e.g. elemental silicon), a silicon-carbon composite, $SiO_x$ ($0 < x \leq 2$) (e.g. $SiO_2$), a Si-Q alloy (wherein Q is an alkali metal, an alkaline-earth metal, Group 13 element, Group 14 element, Group 15 element, Group 16 element, a transition metal, a rare earth element, or a combination thereof, but not Si), or a combination thereof. The element Q may be, e.g., Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn,

In, Tl, Ge, P, As, Sb, Bi, S, Se, Te, Po, or a combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Tl, Ge, P, As, Sb, Bi, S, Se, Te, or a combination thereof). In an implementation, silicon (e.g. elemental silicon) or $SiO_x$ ($0 < x \leq 2$) (e.g. $SiO_2$) may be used.

An average particle diameter ($D_{50}$) of the silicon negative electrode active material may be less than or equal to about 30 μm (and greater than about 0 μm). In an implementation, the average particle diameter ($D_{50}$) of the silicon negative electrode active material may be, e.g., greater than or equal to about 0.1 μm, greater than or equal to about 0.5 μm, or greater than or equal to about 1 μm and less than or equal to about 30 μm, less than or equal to about 20 μm, less than or equal to about 10 μm, or less than or equal to about 5 μm.

Negative Electrode Active Material Composite

Based on a total weight of the negative electrode active material composite of some example embodiments, the conductive material may be included in an amount of, e.g., greater than about 0 wt% and less than or equal to about 0.5 wt%, greater than or equal to about 0.01 wt% and less than or equal to about 0.4 wt%, greater than or equal to about 0.02 wt% and less than or equal to about 0.3 wt%, or greater than or equal to about 0.03 wt% and less than or equal to about 0.2 wt%. In an implementation, the amorphous carbon may be included in an amount of, e.g., greater than about 0 wt% and less than or equal to about 5.0 wt%, greater than or equal to about 1 wt% and less than or equal to about 4.5 wt%, greater than or equal to about 1.5 wt% to less than or equal to about 4 wt%, or greater than or equal to about 2.0 wt% and less than or equal to about 3.5 wt%. In an implementation; secondary particles in which the single particles of artificial graphite are assembled may be included in a balance amount. The content of the amorphous carbon may be based on the residual carbon ratio. Within the above ranges, the effects of the secondary particles in which the single particles of artificial graphite are assembled, the conductive material, and the amorphous carbon may be harmonized.

In an implementation, the negative electrode active material composite may further include the silicon negative electrode active material, and it may be included in an amount of, e.g., greater than about 0 wt% to about 30 wt%, greater than or equal to about 0.5 wt% and less than or equal to about 25 wt%, greater than or equal to about 1 wt% and less than or equal to about 5 wt%, or greater than or equal to about 1 wt% and less than or equal to about 2 wt%, based on a total weight of the negative electrode active material composite.

The negative electrode active material composite of some example embodiments may have a theoretical capacity of about 330 mAh/g to about 400 mAh/g. In an implementation, the silicon negative electrode active material may not be included in the negative electrode active material composite of the embodiment, and the theoretical capacity may be about 330 mAh/g to about 350 mAh/g or about 335 mAh/g to about 345 mAh/g. In an implementation, the silicon negative electrode active material may be included in the negative electrode active material composite of the embodiment, and the theoretical capacity may be about 355 mAh/g to about 400 mAh/g or about 360 mAh/g to about 380 mAh/g.

The negative electrode active material composite of some example embodiments may have an interplanar spacing d002 of the (002) plane of about 3.35 Åto about 3.8 Å; and/or a tap density of about 0.7 g/cc to about 1.5 g/cc; and/or a pellet density of about 1.35 g/cc to about 2.0 g/cc (e.g. an interplanar spacing d002 of the (002) plane of about 3.35 Å to about 3.8 Å; a tap density of about 0.7 g/cc to about 1.5 g/cc; and a pellet density of about 1.35 g/cc to about 2.0 g/cc). In an implementation, the negative electrode active material composite may include secondary particles in which the artificial graphite single particles are assembled, as a main component, and the interplanar spacing d002 of the (002) plane, tap density, and/or pellet density may be the same as those of the artificial graphite. Therefore, a more detailed description may be omitted.

An average particle diameter ($D_{50}$) of the negative electrode active material composite may be about 10 μm to about 25 μm and a maximum particle diameter ($D_{max}$) of the negative electrode active material composite may be about 20 μm to about 50 μm. In an implementation, the average particle diameter ($D_{50}$) of the negative electrode active material composite (which may correspond to the average particle diameter ($D_{50}$) of the secondary particles) may be greater than or equal to about 10 μm, greater than or equal to about 15 μm, or greater than or equal to about 20 μm and less than or equal to about 25 μm, less than or equal to about 24 μm, or less than or equal to about 23 μm. In an implementation, the maximum particle diameter ($D_{max}$) of the composite (which may correspond to the maximum particle diameter ($D_{max}$) of the secondary particles) may be greater than or equal to about 20 μm, greater than or equal to about 25 μm, or greater than or equal to about 30 μm, and less than or equal to about 50 μm, less than or equal to about 49 μm, or less than or equal to about 48 μm. Within these ranges, an excessive increase in the specific surface area of the negative electrode active material composite may be suppressed to help reduce side reactions with the electrolyte, and to improve rate capability while suppressing a resistance of the rechargeable lithium battery.

Method of Manufacturing Negative Electrode Active Material

In some example embodiments, a method of manufacturing the negative electrode active material composite of the aforementioned embodiment may include an assembling step and a carbonization step. The assembling step

may include assembling artificial graphite single particles in the presence of a conductive material (e.g. a conductive material different from artificial graphite) and an amorphous carbon precursor. The carbonization step may include carbonizing the resultant product of the assembling step.

Hereinafter, descriptions overlapping with the foregoing may be omitted, and each step will be described.

Manufacturing of Artificial graphite single particles

Prior to the assembling step, the method may further include a step of manufacturing the artificial graphite particles in which the artificial graphite single particles are manufactured. This step may include heat-treating a petroleum raw material, a coal raw material, a resin raw material, or a combination thereof.

The raw materials may be graphitized and may form the artificial graphite single particles by being heat-treated at about 2,600 °C to about 3,400 °C, e.g., about 2,800 °C to about 3,200 °C; for about 40 hours to about 70 hours, e.g., about 50 hours to about 60 hours.

Assembling Step

After preparing commercially available artificial graphite single particles or directly producing the artificial graphite single particles, the artificial graphite single particles may be assembled in the presence of a conductive material (e.g. a conductive material different from artificial graphite) and an amorphous carbon precursor.

The assembling may be performed at, e.g., about 100 °C to about 500 °C, about 200 °C to about 400 °C, or about 250 °C to about 350 °C. Performing the assembling at the temperature ranges described above may help ensure that the artificial graphite single particles are assembled to form secondary particles, and at the same time, the conductive material may be filled in the internal gaps of the secondary particles, and the amorphous carbon precursor may be coated on the surfaces of a portion or all of the artificial graphite single particles constituting the secondary particles.

Based on a total solid content in the assembling, the conductive material may be included in an amount of, e.g., greater than about 0 wt% and less than or equal to about 0.5 wt%, greater than or equal to about 0.01 wt% and less than or equal to about 0.4 wt%, greater than or equal to about 0.02 wt% and less than or equal to about 0.3 wt%, or greater than or equal to about 0.03 wt% and less than or equal to about 0.2 wt%. The amorphous carbon precursor may be included in an amount of, e.g., greater than about 0 wt% and less than or equal to about 5.0 wt%, greater than or equal to about 1 wt% and less than or equal to about 4.5 wt%, greater than or equal to about 1.5 wt% to less than or equal to about 4 wt%, or greater than or equal to about 2.0 wt% and less than or equal to about 3.5 wt%. The secondary particles in which artificial graphite single particles are assembled may be included in a balance amount. The content of the amorphous carbon may be based on the residual carbon ratio. Within the above ranges, the negative electrode active material composite of some example embodiments may be manufactured.

Carbonization Step

After the assembling, carbonizing of the resultant of the assembling may be performed. In this step, the amorphous carbon precursor may form the amorphous carbon.

The carbonizing may be performed at, e.g., about 800 °C to about 1,400 °C, about 900 °C to about 1,300 °C, or about 1,000 °C to about 1,100 °C, for, e.g., about 15 hours to about 25 hours, about 17 hours to about 23 hours, or about 19 hours to about 21 hours. Performing the carbonizing at the temperature ranges and the time ranges described above may help ensure that the amorphous carbon precursor forms the amorphous carbon.

In an implementation, the heat-treatment may be performed in a furnace under an inert atmosphere (e.g. nitrogen ($N_2$) atmosphere).

Negative Electrode

In an implementation, a negative electrode for a rechargeable lithium battery may include a current collector and a negative electrode active material layer on the current collector. The negative electrode active material layer may include the negative electrode active material composite according to the aforementioned embodiment.

The negative electrode of the aforementioned embodiments may include the negative electrode active material composite of the aforementioned embodiment, and capacity, efficiency, and cycle-life of the rechargeable lithium battery may be simultaneously secured. Hereinafter, repeated descriptions overlapping with the above may be omitted, and configurations other than the negative electrode active material will be described.

Current Collector

The current collector may include a copper foil, a nickel foil, a stainless steel foil, a titanium foil, a nickel foam, a copper foam, a polymer substrate coated with a conductive metal, or a combination thereof.

Negative Electrode Active Material Layer

The negative electrode active material layer may include the negative electrode active material composite of the aforementioned embodiment, and may optionally further include a negative electrode active material different from the composite of the aforementioned embodiments. In an implementation, a weight ratio of the negative electrode active material composite of the aforementioned embodiments and the negative electrode active material different therefrom may be, e.g., about 99.99:0.01 to about 70:30, about 99:1 to about 80:20, or about 95:5 to about 85:15.

The negative electrode active material different from the composite of the aforementioned embodiment may include a material that reversibly intercalates/deintercalates lithium ions, a lithium metal, a lithium metal alloy, a material capable of doping and dedoping lithium, or a transition metal oxide.

The material that reversibly intercalates/deintercalates lithium ions may include, e.g., crystalline carbon, amorphous carbon, or a combination thereof (as a carbon negative electrode active material). The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, or the like.

The lithium metal alloy may include an alloy of lithium and, e.g., Na, K, Rb, Cs, Fr, Be, Mg, Ca, Sr, Si, Sb, Pb, In, Zn, Ba, Ra, Ge, Al, or Sn (e.g. Na, K, Rb, Cs, Be, Mg, Ca, Sr, Si, Sb, Pb, In, Zn, Ba, Ge, Al, or Sn).

The material capable of doping/dedoping lithium may be a Si negative electrode active material or a Sn negative electrode active material. The Si negative electrode active material may include silicon, a silicon-carbon composite, $SiO_x$ ($0 < x < 2$), a Si-Q alloy (wherein Q is an alkali metal, an alkaline-earth metal, a Group 13 element, a Group 14 element, a Group 15 element, a Group 16 element, a transition metal, a rare earth element, or a combination thereof, but not Si) and the Sn negative electrode active material may include Sn, $SnO_2$, a Sn-R alloy (wherein R is an alkali metal, an alkaline-earth metal, a Group 13 element, a Group 14 element, a Group 15 element, a Group 16 element, a transition metal, a rare earth element, or a combination thereof, but not Sn). At least one of these materials may be mixed with $SiO_2$. The elements Q and R may be, e.g., Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Tl, Ge, P, As, Sb, Bi, S, Se, Te, or a combination thereof).

The silicon-carbon composite may be, e.g., a silicon-carbon composite including a core including crystalline carbon and silicon particles and an amorphous carbon coating layer on the surface of the core. The crystalline carbon may be artificial graphite, natural graphite, or a combination thereof. The amorphous carbon precursor may be a coal pitch, mesophase pitch, petroleum pitch, coal oil, petroleum heavy oil, or a polymer resin such as a phenol resin, a furan resin, or a polyimide resin. In an implementation, the content of silicon may be about 10 wt% to about 50 wt% based on the total weight of the silicon-carbon composite. In an implementation, the content of the crystalline carbon may be about 10 wt% to about 70 wt% based on a total weight of the silicon-carbon composite, and the content of the amorphous carbon may be about 20 wt% to about 40 wt% based on a total weight of the silicon-carbon composite. In an implementation, a thickness of the amorphous carbon coating layer may be about 5 nm to about 100 nm. An average particle diameter ($D_{50}$) of the silicon particles may be about 10 nm to about 20 μm. In an implementation, the average particle diameter ($D_{50}$) of the silicon particles may be about 10 nm to about 200 nm. The silicon particles may exist in an oxidized form, and in this case, an atomic content ratio of Si:O in the silicon particles indicating a degree of oxidation may be a weight ratio of about 99:1 to about 33:67. The silicon particles may be $SiO_x$ particles, and in this case, the range of x in $SiO_x$ may be greater than about 0 and less than about 2. As used herein, when a definition is not otherwise provided, an average particle diameter ($D_{50}$) indicates a particle where an accumulated volume is about 50 volume% in a particle distribution.

The Si negative electrode active material or Sn negative electrode active material may be mixed with the carbon negative electrode active material. In an implementation, the Si negative electrode active material or Sn negative electrode active material and the carbon negative electrode active material may be mixed and used, and a mixing ratio may be a weight ratio of about 1:99 to about 90:10.

In the negative electrode active material layer, the negative electrode active material may be included in an amount of about 95 wt% to about 99 wt%, based on a total weight of the negative electrode active material layer.

In an implementation, the negative electrode active material layer may further include a binder. In an implementation, the negative electrode active material layer may include about 90 wt% to about 98 wt% of the negative electrode active material composite and about 1 wt% to about 5 wt% of the binder.

The binder may facilitate adhesion of the negative electrode active material composites to each other and also

adhesion of the negative electrode active material to the current collector. The binder may be a water-insoluble binder, a water-soluble binder, or a combination thereof.

Examples of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

The water-soluble binder may include a rubber binder or a polymer resin binder. The rubber binder may include a styrene-butadiene rubber, an acrylated styrene-butadiene rubber, an acrylonitrile-butadiene rubber, an acrylic rubber, a butyl rubber, a fluororubber, or a combination thereof. The polymer resin binder may include polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, or a combination thereof.

In an implementation, a water-soluble binder may be used as the negative electrode binder, and a cellulose compound capable of imparting viscosity as a thickener may be further included. In an implementation, the cellulose compound may include, e.g., carboxymethyl cellulose, hydroxypropylmethyl cellulose, methyl cellulose, or alkali metal salts thereof. In an implementation, the alkali metal may include Na, K, or Li. The amount of such a thickener used may be about 0.1 parts by weight to about 3 parts by weight based on 100 parts by weight of the negative electrode active material.

In an implementation, the negative electrode active material layer may further include a conductive material. In an implementation, the negative electrode active material layer may include about 1 wt% to about 5 wt% of the conductive material. In an implementation, the conductive material may already included in the negative electrode active material composite of the embodiments, and the negative electrode active material layer may have sufficient conductivity without further including the other conductive material.

The conductive material may provide electrode conductivity. A suitable electrically conductive material that does not cause a chemical change may be used as a conductive material. Examples of the conductive material may include a carbon material such as natural graphite, artificial graphite, carbon black, acetylene black, ketjen black, a carbon fiber, carbon nanotube, or the like; a metal material of a metal powder or a metal fiber including copper, nickel, aluminium, silver, or the like; a conductive polymer such as a polyphenylene derivative; or a mixture thereof. In an implementation, the negative electrode active material composite according to the embodiments may be used, and a sufficient conductive effect may be realized even if a conductive material is not separately included or the content of the conductive material is reduced if/when manufacturing the negative electrode.

The negative current collector may include, e.g., a copper foil, a nickel foil, a stainless steel foil, a titanium foil, a nickel foam, a copper foam, a polymer substrate coated with a conductive metal, or a combination thereof.

## Rechargeable Lithium Battery

In an implementation, a rechargeable lithium battery may include a positive electrode; a negative electrode; and an electrolyte. In an implementation, the negative electrode may be the negative electrode of the aforementioned embodiments.

In an implementation, the rechargeable lithium battery of the embodiment may include the negative electrode of the aforementioned embodiment, and capacity, efficiency, and cycle-life of the rechargeable lithium battery may be simultaneously secured.

FIG. 3 is a perspective view of a rechargeable lithium battery according to some example embodiments. Here, the rechargeable lithium battery according to some example embodiments is described as an example in which the electrode assembly is in a coin-type case. In an implementation, an electrode assembly such as stack type, winding type (jelly roll type), stack and folding type, or Z-folding type may be applied to a battery of a type placed in a case, such as a cylindrical shape, a prismatic shape, or a coin shape.

Referring to FIG. 3, a rechargeable lithium battery 1 of some example embodiments may include an electrode assembly, a first case 10, and a second case 20. In the drawing, the first case 10 forms a lower portion of the rechargeable battery 1 and accommodates an electrode assembly inserted through a first opening on the upper side. The second case 20 may have a second opening smaller than the first opening on the lower side, and may be inserted into the first case 10 while covering the electrode assembly. In the drawing, the second case 20 forms the upper portion of the secondary battery 1. The first and second cases 10 and 20 may be coupled to each other and electrically insulate the inner surface of the first case 10 and the outer surface of the second case 20 through an insulating material 40 therebetween.

The coin-type battery may be mainly cylindrical, and a cross section in the horizontal direction may be circular. In an implementation, a shape having an elliptical or polygonal cross-section in the horizontal direction may also be included therein. In an implementation, the diameter may be set to a maximum distance of the outer periphery of the

battery relative to the horizontal direction of the battery, and the height is set to the minimum distance between the outer planes of the battery case.

Hereinafter, repeated descriptions overlapping with those described above may be omitted, and configurations other than the negative electrode will be described.

Positive Electrode

The positive electrode may include a current collector and a positive electrode active material layer on the current collector. In an implementation, the positive electrode may have a structure in which a current collector, a positive electrode active material layer, a functional layer, and an adhesive layer are stacked in this order.

The positive electrode active material layer may include a positive electrode active material, and may further include a binder or a conductive material.

The positive electrode active material may include lithiated intercalation compounds that reversibly intercalate and deintercalate lithium ions. Examples of the positive electrode active material may include a compound represented by one of the following chemical formulae.

$Li_aA_{1-b}X_bD'_2$(0.90 ≤ a ≤ 1.8, 0 ≤ b ≤ 0.5);

$Li_aA_{1-b}X_bO_{2-c}D'_c$(0.90 ≤ a ≤ 1.8, 0 ≤ b ≤ 0.5, 0 ≤ c ≤ 0.05);

$Li_aE_{1-b}X_bO_{2-c}D'_c$(0.90 ≤ a ≤ 1.8, 0 ≤ b ≤ 0.5, 0 ≤ c ≤ 0.05);

$Li_aE_{2-b}X_bO_{4-c}D'_c$ (0.90 ≤ a ≤ 1.8, 0 ≤ b ≤ 0.5, 0 ≤ c ≤ 0.05);

$Li_aNi_{1-b-c}Co_bX_cD'_\alpha$(0.90 ≤ a ≤1.8, 0 ≤ b ≤ 0.5, 0 ≤ c ≤ 0.5, 0 < α ≤ 2);

$Li_aNi_{1-b-c}Co_bX_cO_{2-\alpha}T_\alpha$(0.90 ≤ a ≤ 1.8, 0 ≤ b ≤ 0.5, 0 ≤ c ≤ 0.05, 0 < α < 2);

$Li_aNi_{1-b-c}Co_bX_cO_{2-\alpha}T_2$(0.90 ≤ a ≤ 1.8, 0 ≤ b ≤ 0.5, 0 ≤ c ≤ 0.05, 0 < α < 2);

$Li_aNi_{1-b-c}Mn_bX_cD'_\alpha$(0.90 ≤ a ≤ 1.8, 0 ≤ b ≤ 0.5, 0 ≤ c ≤ 0.05, 0 < α ≤ 2);

$Li_aNi_{1-b-c}Mn_bX_cO_{2-\alpha}T_\alpha$(0.90 ≤ a ≤ 1.8, 0 ≤ b ≤ 0.5, 0 ≤ c ≤ 0.05, 0 < α < 2);

$Li_aNi_{1-b-c}Mn_bX_cO_{2-\alpha}T_2$(0.90 ≤ a ≤ 1.8, 0 ≤ b ≤ 0.5, 0 ≤ c ≤ 0.05, 0 < α < 2);

$Li_aNi_bE_cG_dO_2$(0.90 ≤ a ≤ 1.8, 0 ≤ b ≤ 0.9, 0 ≤ c ≤ 0.5, 0.001 ≤ d ≤ 0.1);

$Li_aNi_bCo_cMn_dG_eO_2$(0.90 ≤ a ≤ 1.8, 0 ≤ b ≤ 0.9, 0 ≤ c ≤ 0.5, 0 ≤ d ≤0.5, 0.001 ≤ e ≤ 0.1);

$Li_aNiG_bO2$(0.90 ≤ a ≤ 1.8, 0.001 ≤ b ≤ 0.1);

$Li_aCoG_bO_2$(0.90 ≤ a ≤ 1.8, 0.001 ≤ b ≤ 0.1);

$Li_aMn_{1-b}G_bO_2$(0.90 ≤ a ≤ 1.8, 0.001 ≤ b ≤ 0.1);

$Li_aMn_2G_bO_4$(0.90 ≤ a ≤ 1.8, 0.001 ≤ b ≤ 0.1);

$Li_aMn_{1-g}G_gPO_4$(0.90 ≤ a ≤ 1.8, 0 ≤ g ≤ 0.5);

$QO_2$, $QS_2$; $LiQS_2$;

$V_2O_5$, $LiV_2O_5$;

$LiZO_2$;

$LiNiVO_4$;

$Li_{(3-f)}J_2(PO_4)_3 (0 \leq f \leq 2)$;

$Li_{(3-f)}Fe_2(PO_4)_3 (0 \leq f \leq 2)$;

$Li_aFePO_4 (0.90 \leq a \leq 1.8)$.

In the above chemical formulas, A may be, e.g., Ni, Co, Mn, or a combination thereof; X may be, e.g., Al, Ni, Co, Mn, Cr, Fe, Mg, Sr, V, a rare earth element, or a combination thereof; D' may be, e.g., O, F, S, P, or a combination thereof; E may be, e.g., Co, Mn, or a combination thereof; T may be, e.g., F, S, P, or a combination thereof; G may be, e.g., Al, Cr, Mn, Fe, Mg, La, Ce, Sr, V, or a combination thereof; Q may be, e.g., Ti, Mo, Mn, or a combination thereof; Z may be, e.g., Cr, V, Fe, Sc, Y, or a combination thereof; and J may be, e.g., V, Cr, Mn, Co, Ni, Cu, or a combination thereof.

The compounds may have a coating layer on the surface, or may be mixed with another compound having a coating layer. The coating layer may include a coating element compound, e.g., an oxide of a coating element, a hydroxide of a coating element, an oxyhydroxide of a coating element, an oxycarbonate of a coating element, or a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a combination thereof. In the coating layer forming process, a method that does not adversely affect the physical properties of the positive electrode active material, e.g., spray coating, dipping, or the like, may be used.

The positive electrode active material may include, e.g., a lithium nickel composite oxide represented by Chemical Formula 11.

[Chemical Formula 11] $Li_{a11}Ni_{x11}M^{11}_{y11}M^{12}_{1-x11-y12}O_2$

In Chemical Formula 11, a11, x11 and y11 may satisfy the ranges $0.9 \leq a11 \leq 1.8$, $0.3 \leq x11 \leq 1$, $0 \leq y11 \leq 0.7$, and $M^{11}$ and $M^{12}$ may each independently be, e.g., Al, B, Ce, Co, Cr, F, Mg, Mn, Mo, Nb, P, S, Si, Sr, Ti, V, W, Zr, or a combination thereof.

In Chemical Formula 11, x11 and y11 may satisfy the ranges $0.4 \leq x11 \leq 1$ and $0 \leq y11 \leq 0.6$, $0.5 \leq x11 \leq 1$ and $0 \leq y11 \leq 0.5$, $0.6 \leq x11 \leq 1$ and $0 \leq y11 \leq 0.4$, or $0.7 \leq x11 \leq 1$ and $0 \leq y11 \leq 0.3$, $0.8 \leq x11 \leq 1$ and $0 \leq y11 \leq 0.2$, or $0.9 \leq x11 \leq 1$ and $0 \leq y11 \leq 0.1$.

In an implementation, the positive electrode active material may include a lithium nickel cobalt composite oxide represented by Chemical Formula 12.

[Chemical Formula 12] $Li_{a12}Ni_{x12}Co_{y12}M^{13}_{1-x12-y12}O_2$

In Chemical Formula 12, a12, x12 and y12 may satisfy the ranges $0.9 \leq a12 \leq 1.8$, $0.3 \leq x12 < 1$, $0 < y12 \leq 0.7$, and $M^{13}$ may be, e.g., Al, B, Ce, Cr, F, Mg, Mn, Mo, Nb, P, S, Si, Sr, Ti, V, W, Zr, or a combination thereof.

In Chemical Formula 12, x12 and y12 may satisfy the ranges $0.3 \leq x12 \leq 0.99$ and $0.01 \leq y12 \leq 0.7$, $0.4 \leq x12 \leq 0.99$ and $0.01 \leq y12 \leq 0.6$, $0.5 \leq x12 \leq 0.99$ and $0.01 \leq y12 \leq 0.5$, $0.6 \leq x12 \leq 0.99$ and $0.01 \leq y12 \leq 0.4$, $0.7 \leq x12 \leq 0.99$ and $0.01 \leq y12 \leq 0.3$, $0.8 \leq x12 \leq 0.99$ and $0.01 \leq y12 \leq 0.2$, or $0.9 \leq x12 \leq 0.99$ and $0.01 \leq y12 \leq 0.1$.

In an implementation, the positive electrode active material may include a lithium nickel cobalt composite oxide represented by Chemical Formula 13.

[Chemical Formula 13] $Li_{a13}Ni_{x13}Coy_{13}M^{14}z_{13}M^{15}_{1-x13-y13-z13}O_2$

In Chemical Formula 13, a13, x13, y13 and z13 may satisfy the ranges $0.9 \leq a13 \leq 1.8$, $0.3 \leq x13 \leq 0.98$, $0.01 \leq y13 \leq 0.69$, $0.01 \leq z13 \leq 0.69$, $M^{14}$ may be, e.g., Al, Mn, or a combination thereof, and $M^{15}$ may be, e.g., B, Ce, Cr, F, Mg, Mo, Nb, P, S, Si, Sr, Ti, V, W, Zr, or a combination thereof.

In Chemical Formula 13, x13, y13 and z13 may satisfy the ranges $0.4 \leq x13 \leq 0.98$, $0.01 \leq y13 \leq 0.59$, and $0.01 \leq z13 \leq 0.59$, $0.5 \leq x13 \leq 0.98$, $0.01 \leq y13 \leq 0.49$, and $0.01 \leq z13 \leq 0.49$, or $0.6 \leq x13 \leq 0.98$, $0.01 \leq y13 \leq 0.39$, and $0.01 \leq z13 \leq 0.39$, or $0.7 \leq x13 \leq 0.98$, $0.01 \leq y13 \leq 0.29$, and $0.01 \leq z13 \leq 0.29$, $0.8 \leq x13 \leq 0.98$, $0.01 \leq y13 \leq 0.19$, and $0.01 \leq z13 \leq 0.19$, or $0.9 \leq x13 \leq 0.98$, $0.01 \leq y13 \leq 0.09$, and $0.01 \leq z13 \leq 0.09$.

The content of the positive electrode active material may be about 90 wt% to about 98 wt%, e.g., about 90 wt% to about 95 wt%, based on a total weight of the positive electrode active material layer. Each content of the binder and the conductive material may be, e.g., about 1 wt% to about 5 wt%, based on a total weight of the positive electrode active material layer.

The binder may help improve binding properties of positive electrode active material particles with one another and with a current collector. Examples thereof may include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like.

The conductive material may provide electrode conductivity. A suitable electrically conductive material that does not cause a chemical change may be used. Examples of the conductive material may include a carbon material such as natural graphite, artificial graphite, carbon black, acetylene black, ketjen black, a carbon fiber, and the like; a metal material of a metal powder or a metal fiber including copper, nickel, aluminium, silver, and the like; a conductive polymer such as a polyphenylene derivative; or a mixture thereof.

In an implementation, an aluminium foil may be used as the positive current collector.

Separator

The separator may separate a positive electrode and a negative electrode and may provide a transporting passage for lithium ions and may be a suitable separator for a lithium ion battery. In an implementation, it may have low resistance to ion transport and excellent impregnation for an electrolyte. In an implementation, the separator may include, e.g., a glass fiber, polyester, Teflon, polyethylene, polypropylene, polytetrafluoroethylene, or a combination thereof. It may have a form of a non-woven fabric or a woven fabric. In an implementation, in a lithium ion battery, a polyolefin polymer separator such as polyethylene or polypropylene may be used. In order to ensure the heat resistance or mechanical strength, a coated separator including a ceramic component or a polymer material may be used. In an implementation, it may have a mono-layered or multi-layered structure.

Electrolyte

The electrolyte may include a non-aqueous organic solvent and a lithium salt.

The non-aqueous organic solvent may serve as a medium for transmitting ions taking part in the electrochemical reaction of a battery. The non-aqueous organic solvent may include a carbonate, ester, ether, ketone, alcohol, or aprotic solvent. Examples of the carbonate solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester solvent may include methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether solvent may include dibutyl ether, tetraglyme, diglyme, dimethoxyethane, 2-methyltetrahydrofuran, tetrahydrofuran, and the like and the ketone-based solvent may be cyclohexanone, or the like. The alcohol solvent may include ethyl alcohol, isopropyl alcohol, or the like. The aprotic solvent may include nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. If the organic solvent is used in a mixture, the mixture ratio may be controlled in accordance with a desirable battery performance.

In an implementation, in the case of the carbonate solvent, a mixture of a cyclic carbonate and a chain carbonate may be used. In an implementation, the cyclic carbonate and the chain carbonate may be mixed in a volume ratio of about 1:1 to about 1:9, and the electrolyte may exhibit excellent performance.

The non-aqueous organic solvent may further include an aromatic hydrocarbon organic solvent in addition to the carbonate solvent. In an implementation, the carbonate solvent and the aromatic hydrocarbon organic solvent may be mixed in a volume ratio of about 1:1 to about 30:1.

The aromatic hydrocarbon solvent may include, e.g., an aromatic hydrocarbon compound represented by Chemical Formula I.

[Chemical Formula I]

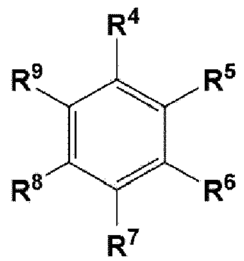

In Chemical Formula I, $R^4$ to $R^9$ may each independently be or include, e.g., hydrogen, a halogen, a C1 to C10 alkyl group, a haloalkyl group, or a combination thereof.

Examples of the aromatic hydrocarbon solvent may include benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

In an implementation, the electrolyte may further include vinylene carbonate or an ethylene carbonate compound of Chemical Formula II in order to help improve cycle-life of a battery.

[Chemical Formula II]

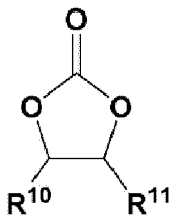

In Chemical Formula II, $R^{10}$ and $R^{11}$ may each independently be or include, e.g., hydrogen, a halogen, a cyano group, a nitro group, or fluorinated C1 to C5 alkyl group. In an implementation, at least one of $R^{10}$ and $R^{11}$ is a halogen, a cyano group, a nitro group, or fluorinated C1 to C5 alkyl group, and both of $R^{10}$ and $R^{11}$ are not hydrogen.

Examples of the ethylene carbonate-based compound may include difluoro ethylenecarbonate, chloroethylene carbonate, dichloroethylene carbonate, bromoethylene carbonate, dibromoethylene carbonate, nitroethylene carbonate, cyanoethylene carbonate, and fluoroethylene carbonate. The amount of the additive for improving cycle-life may be used within an appropriate range.

The lithium salt dissolved in the non-organic solvent may supply lithium ions in a battery, may facilitate a basic operation of a rechargeable lithium battery, and may help improve transportation of the lithium ions between positive and negative electrodes.

Examples of the lithium salt may include $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide; LiFSI), $LiC_4F_9SO_3$, $LiClO_4$, $LiAlO_2$, $LiAlCl_4$, $LiPO_2F_2$, $LiN(C_xF_{2x+i}SO_2)(C_yF_{2y+i}SO_2)$ (wherein x and y are natural numbers, e.g., an integer ranging from 1 to 20), lithium difluoro(bisoxalato) phosphate, LiCl, LiI, $LiB(C_2O_4)_2$ (lithium bis(oxalato) borate; LiBOB), and lithium difluoro(oxalato)borate (LiDFOB).

The lithium salt may be used in a concentration ranging from about 0.1 M to about 2.0 M. Including the lithium salt at the above concentration range may help ensure that an electrolyte has excellent performance and lithium ion mobility due to optimal electrolyte conductivity and viscosity.

Rechargeable lithium batteries may be classified as, e.g., lithium ion batteries, lithium ion polymer batteries, and lithium polymer batteries according to the presence of a separator and the type of electrolyte used therein. The rechargeable lithium batteries may have a variety of shapes and sizes, and may include cylindrical, prismatic, coin, or pouch-type batteries, and may be thin film batteries or may be rather bulky in size.

Hereinafter, examples of the present invention and comparative examples are described. It is to be understood, however, that the examples are for the purpose of illustration and are not to be construed as limiting the present disclosure.

Example 1

(1) Preparation of Negative Electrode Active Material Composite

General coke was heat-treated in a furnace at 3,000 °C for 52 hours under a nitrogen atmosphere, manufacturing artificial graphite single particles.

In order to prepare a negative electrode active material composite, 96.62 g of the artificial graphite single particles, 0.05 g of carbon nanotubes (CNT) as a conductive material, and 3.33 g of liquid coal pitch (a solid content: 60 wt%, a residual carbon rate: 2 wt%) as an amorphous carbon precursor were mixed at 300 °C with a mixer. In this

step where the artificial graphite single particles were assembled into secondary particles, the conductive material was embedded in internal gaps of the secondary particles, and simultaneously, the amorphous carbon precursor was coated on the surfaces of a portion or all of the artificial graphite single particles.

A product from this mixing step was carbonized in the furnace at 1,100 °C under the nitrogen atmosphere for 20 hours. In this step, the amorphous carbon was formed from the amorphous carbon precursor, finally obtaining the negative electrode active material composite of Example 1.

(2) Manufacture of Negative Electrode

The negative electrode active material composite, CMC (carboxymethyl cellulose) as a thickener, and SBR (styrene butadiene rubber) as a binder in a solid-based weight ratio of 97.5:1.0:1.5 were mixed in a water solvent, preparing a negative electrode active material slurry. The negative electrode active material slurry was coated on one surface of a copper foil with a thickness of 10 μm and then, dried and roll-pressed, forming a 64 μm-thick 16-pi negative electrode active material layer (a total thickness of a negative electrode: 74 μm). Herein, a method of coating the negative electrode active material slurry was die coating.

(3) Manufacture of Rechargeable Lithium Battery Cells

95 wt% of $LiCoO_2$ as a positive electrode active material, 3 wt% of polyvinylidene fluoride as a binder, and 2 wt% of ketjen black as a conductive material were mixed in an N-methylpyrrolidone solvent, preparing a positive electrode active material slurry. The positive electrode active material slurry was coated on one surface of a 14φ aluminium current collector with a thickness of 12 μm, forming a 82 μm-thick positive electrode active material layer (a total thickness of a positive electrode: 94 μm). Herein, the method of coating the positive electrode active material slurry was die coating.

A 14 μm-thick 18φ polyethylene separator was prepared and inserted between the negative electrode and the positive electrode. Herein, the coating surface of the negative electrode was disposed to contact with the separator.

The electrodes were assembled in a coin type can, and an electrolyte solution, prepared by forming a 1.10 M solution of $LiPF_6$ lithium salt and FEC 10% in a mixed solvent of ethylene carbonate and diethyl carbonate (volume ratio of 50:50), was injected thereinto, manufacturing a rechargeable lithium battery cell.

Example 2

A negative electrode active material composite was prepared by changing the mixing ratio as shown in Table 1. Other than that, a negative electrode active material composite, a negative electrode, and a rechargeable lithium battery cell of Example 2 were manufactured in the same manner as in Example 1.

Example 3

A negative electrode active material composite was prepared by changing the mixing ratio as shown in Table 1. Other than that, a negative electrode active material composite, a negative electrode, and a rechargeable lithium battery cell of Example 3 were manufactured in the same manner as in Example 1.

Example 4

A negative electrode active material composite was prepared by changing the mixing ratio as shown in Table 1. Other than that, a negative electrode active material composite, a negative electrode, and a rechargeable lithium battery cell of Example 4 were manufactured in the same manner as in Example 1.

Example 5

A negative electrode active material composite was manufactured by changing a type of the conductive material to denka black. Other than that, a negative electrode active material composite, a negative electrode, and a rechargeable lithium battery cell of Example 5 were manufactured in the same manner as in Example 1.

Example 6

A negative electrode active material composite was manufactured by changing a type of the conductive material to graphene. Other than that, a negative electrode active material composite, a negative electrode, and a rechargeable lithium battery cell of Example 6 were manufactured in the same manner as in Example 1.

Example 7

A negative electrode active material composite was prepared by adding silicon (Si) particles having an average particle diameter ($D_{50}$) of 1 μm in the step of assembling the secondary particles as shown in Table 1. Other than that, a negative electrode active material composite, a negative electrode, and a rechargeable lithium battery cell of Example 7 were manufactured in the same manner as in Example 1.

Example 8

A negative electrode active material composite was prepared by adding silica particles ($SiO_2$) having an average particle diameter ($D_{50}$) of 5 μm before assembling the secondary particles as shown in Table 1. Other than that, a negative electrode active material composite, a negative electrode, and a rechargeable lithium battery cell of Example 8 were manufactured in the same manner as in Example 1.

Comparative Example 1

Secondary particles (in which artificial graphite single particles were assembled) were prepared under the same condition as in Example 1.

96.67 g of the artificial graphite particles and 3.33 g of liquid coal pitch (a solid content: 60 wt%, a residual carbon rate: 2 wt%) as an amorphous carbon precursor were mixed at 300 °C with a mixer. In this step, the secondary particles in which the artificial graphite single particles were assembled were formed, and the amorphous carbon precursor was coated on the surfaces of a portion or all of the artificial graphite single particles.

A product obtained in the mixing step was carbonized for 20 hours in a furnace at 1,100 °C under a nitrogen atmosphere. In this step, the amorphous carbon was formed from the amorphous carbon precursor, finally obtaining a negative electrode active material composite of Comparative Example 1.

(2) Manufacture of Negative Electrode

The negative electrode active material composite, carbon nanotube (CNT) as a conductive material, CMC (carboxymethyl cellulose) as a thickener, and SBR (styrene butadiene rubber) as a binder in a solid-based weight ratio of 97.45:0.05:1.0:1.5 were mixed in a water solvent, preparing negative electrode active material slurry. The negative electrode active material slurry was coated on one surface of a 10 μm-thick copper foil and then, dried and roll-pressed, forming a 64 μm-thick negative electrode active material layer (a total thickness of a negative electrode: 74 μm). Herein, a method of coating the negative electrode active material slurry was die coating.

(3) Manufacture of Rechargeable Lithium Battery Cells

A rechargeable lithium battery cell of Comparative Example 1 was prepared in the same manner as in Example 1 except that the negative electrode of Comparative Example 1 was used instead of the negative electrode of Example 1.

Comparative Example 2

A negative electrode active material composite was prepared by using natural graphite particles as shown in Table 1.

Other than that, a negative electrode active material composite, a negative electrode, and a rechargeable lithium battery cell were manufactured in the same manner as in Comparative Example 1.

Comparative Example 3

A negative electrode active material composite was prepared by using 96.62 g of general coke, 0.05 g carbon nanotube (CNT) as a conductive material, and 3.33 g of liquid coal pitch (a solid content: 60 wt%, a residual carbon rate 2 wt%) as an amorphous carbon precursor were mixed at 300 °C with a mixer.

A product from the mixing step was carbonized at 1,100 °C in a furnace under a nitrogen atmosphere for 20 hours. Subsequently, the carbonized product was graphitized at 3,000 °C in the furnace for 10 hours under the nitrogen atmosphere, finally obtaining a negative electrode active material composite of Comparative Example 3

(2) Manufacture of Negative Electrode and Rechargeable Lithium Battery Cells

A negative electrode and a rechargeable lithium battery cell of Comparative Example 3 were manufactured in the same manner as in Example 1 except that the negative electrode active material composite was used.

(Table 1)

| | Type of conductive material | Negative electrode active material composite part per weight) | | | | Negative electrode (wt%) | | | |
|---|---|---|---|---|---|---|---|---|---|
| | | Graphite (artificial or natural) or general coke | Conductive material | amorphous carbon | Silicon or silica | Active material | CNT | CMC | SBR |
| Ex. 1 | CNT | 97.97 (artificial graphite) | 0.03 | 2 | 0 | 97.5 | - | 1.0 | 1.5 |
| Ex. 2 | CNT | 97.8 (artificial graphite) | 0.2 | 2 | 0 | 97.5 | - | 1.0 | 1.5 |
| Ex. 3 | CNT | 96.47 (artificial graphite) | 0.03 | 3.5 | 0 | 97.5 | - | 1.0 | 1.5 |
| Ex. 4 | CNT | 96.3 (artificial graphite) | 0.2 | 3.5 | 0 | 97.5 | - | 1.0 | 1.5 |
| Ex. 5 | Denka Black | 97.97 (artificial graphite) | 0.03 | 2 | 0 | 97.5 | - | 1.0 | 1.5 |
| Ex. 6 | Graphene | 97.97 (artificial graphite) | 0.03 | 2 | 0 | 97.5 | - | 1.0 | 1.5 |
| Ex. 7 | CNT | 96.97 (artificial graphite) | 0.03 | 2 | 1 | 97.5 | - | 1.0 | 1.5 |
| Ex. 8 | CNT | 95.97 (artificial graphite) | 0.03 | 2 | 2 | 97.5 | - | 1.0 | 1.5 |
| Comp. Ex. 1 | - | 97.45 (artificial graphite) | - | 2 | 0 | 97.45 | 0.05 | 1.0 | 1.5 |
| Comp. Ex. 2 | CNT | 97.97 (natural graphite) | 0.03 | 2 | 0 | 97.5 | - | 1.0 | 1.5 |
| Comp. Ex. 3 | CNT | 97.97 (general coke) | 0.03 | 2 | 0 | 97.5 | - | 1.0 | 1.5 |

Evaluation Example 1: Appearance Evaluation of Negative Electrode Active Material Composite

A scanning electron microscope (SEM) image at 2,000 magnification of the negative electrode active material composites of Example 1 and Comparative Examples 1 to 3 was taken, and the images are shown in FIGS. 4 to 7.

FIG. 4 is a SEM image of the negative electrode active material composite of Example 1, in which the conductive material was in internal gaps of the secondary particles into which the artificial graphite single particles were assembled; and the amorphous carbon was coated on the surfaces of a portion of all of the artificial graphite secondary particles.

FIG. 5 is a SEM image of the negative electrode active material composite of Comparative Example 1, which shows that the amorphous carbon was coated on the surfaces of a portion or all the secondary particles into which the artificial graphite single particles were assembled.

FIG. 6 is a SEM image of the negative electrode active material composite of Comparative Example 2, which shows that the conductive material was in the internal gaps of the secondary particles into which the natural graphite single particles were assembled; and the amorphous carbon was coated on the surfaces of a portion of all of the natural graphite secondary particles.

FIG. 7 is a SEM image of the negative electrode active material composite of Comparative Example 3, which shows that conductive material was in the internal gaps of the secondary particles into which the carbonized coke particles were assembled. Herein, the amorphous carbon was decomposed by the heat treatment at about 3,000 °C and thus not found in the final negative electrode active material composite.

Evaluation Example 2: Evaluation of Physical Properties of Negative Electrode Active Material Composite

Each of the negative electrode active material composites was evaluated with respect to interplanar spacing d002, pellet density, and an average particle diameter ($D_{50}$), and the results are shown in Table 2.

Theoretical capacity: A negative electrode active material composite sample was used to manufacture a negative electrode sample in the same manner as in Example 1. A rechargeable lithium battery cell (half coin cell) sample was manufactured in the same manner as in Example 1 except that the negative electrode sample and simultaneously, a lithium metal as a counter electrode were used. The rechargeable lithium battery sample was driven under the following charge and discharge conditions to obtain theoretical capacity.

Charge: 0.1 C current, 0.01 C cutoff, 0.01V CC-CV
Discharge: 0.1 C current, 1.5 V

2) Interplanar spacing d002: After mixing the negative electrode active material composite sample with a small amount of silicon, spreading the mixture on a sample plate, and then, pressing it down with a speculum plate, the remaining portion was taken, preparing an equilibrium sample. The equilibrium sample was analyzed by using an XRD (X-ray diffraction) instrument under conditions of an angle of 53 ° to 57 °, a voltage of 40 kV, and a current of 30 mA to obtain a peak of a (002) plane.

3) Tap density: After filling the negative electrode active material composite sample in a 25 mL cylinder and 1,000 times vibrating it at 250 times/min, a volume thereof was measured to calculate tap density.

4) Pellet density: 1 g of the negative electrode active material composite sample was put in a cylinder to examine a thickness change under a predetermined pressure, which was used to calculate pellet density.

5) Average particle diameter: After uniformly dispersing a small amount of the negative electrode active material composite sample in ethanol and keeping it under an ultrasonic wave at intensity of 80% for 5 seconds by reflecting a refractive index of 2.42, an average particle diameter thereof was measured, if/when reaching a shading degree range (10% to 20%).

(Table 2)

| | Theoretical capacity (mAh/g) | Interplanar spacing d002 (Å) | Tap density (g/cc) | Pellet density (g/cc) | $D_{50}$ (μm) |
|---|---|---|---|---|---|
| Ex. 1 | 343 | 3.5963 | 0.91 | 1.57 | 22 |
| Ex. 2 | 342 | 3.5935 | 0.89 | 1.58 | 23 |
| Ex. 3 | 340 | 3.5885 | 0.88 | 1.53 | 24 |
| Ex. 4 | 339 | 3.5889 | 0.87 | 1.53 | 24 |
| Ex. 5 | 340 | 3.5925 | 0.88 | 1.58 | 23 |
| Ex. 6 | 338 | 3.5948 | 0.87 | 1.59 | 22 |
| Ex. 7 | 365 | 3.5925 | 0.90 | 1.56 | 23 |
| Ex. 8 | 380 | 3.5927 | 0.89 | 1.55 | 24 |

(continued)

| | Theoretical capacity (mAh/g) | Interplanar spacing d002 (Å) | Tap density (g/cc) | Pellet density (g/cc) | $D_{50}$ (μm) |
|---|---|---|---|---|---|
| Comp. Ex. 1 | 343 | 3.5925 | 0.92 | 1.56 | 20 |
| Comp. Ex. 2 | 348 | 3.6085 | 0.92 | 1.62 | 23 |
| Comp. Ex. 3 | 341 | 3.5935 | 0.95 | 1.54 | 19 |

Referring to Table 2, the negative electrode active material composites of Examples 1 to 8 exhibited theoretical capacity of 330 mAh/g to 380 mAh/g, an interplanar spacing d002 of the (002) plane of 3.55 Å to 3.6 Å in the XRD measurement, tap density of 0.85 g/cc to 0.95 g/cc, pellet density of 1.5 g/cc to 1.6 g/cc, and a $D_{50}$ particle diameter of 20 μm to 25 μm. Among the negative electrode active material composites of Examples 1 to 8, the negative electrode active material composites of Examples 7 and 8 (to which a silicon negative electrode active material was added) exhibited high theoretical capacity, and interplanar spacing, tap density, pellet density, and a $D_{50}$ particle diameter varied depending on a mixing ratio of the raw materials.

Evaluation Example 3: Evaluation of Electrochemical Characteristics of Rechargeable Lithium Battery Cells

Each rechargeable lithium battery cell manufactured in Examples 1 to 8 and Comparative Examples 1 to 3 was evaluated with respect to electrochemical characteristics in the following manner, and the results are shown in Table 3.

(1) Initial discharge capacity and initial efficiency: Each of the rechargeable lithium battery cells of Examples 1 to 8 and Comparative Examples 1 to 3 was evaluated with respect to initial discharge capacity and initial efficiency, and the results are shown in Table 3. Herein, the rechargeable lithium battery cells were once charged and discharged at 0.1 C as one cycle to evaluate initial discharge capacity, which was used to calculate initial efficiency according to Equation 1.

[Equation 1]

$$\text{Initial efficiency (\%)} = (\text{discharge capacity at first cycle} / \text{charge capacity at first cycle}) \times 100$$

(2) Charging rate: Each of the cells was evaluated with respect to a charging rate by using a capacity ratio of capacity of a CC section if/when CC-CV charged at 2.0 C to capacity of the CC section if/when CC-CV charged at 0.2 C.
(3) DC-iR: Each of the cells was discharged to SOC 50% and applied with a current of 8 C for 10 seconds to calculate a voltage change, which was used to measure battery resistance.
(4) Long-term cycle-life characteristics: Each of the cells was 300 times charged and discharged at 0.5 C at 25 °C to calculate a ratio of $300^{th}$ discharge capacity to $1^{st}$ discharge capacity.

(Table 3)

| | Initial efficiency (F.C.E, %) | Initial discharge capacity (mAh/g) | Chargin g rate (%) | DC-iR (mΩ) | Long-term cycle-life characteristics @300 cyc (%) |
|---|---|---|---|---|---|
| Example 1 | 91.7 | 343 | 35 | 6.1 | 73.2 |
| Example 2 | 91.2 | 340 | 40 | 5.4 | 82.5 |
| Example 3 | 90.5 | 338 | 37 | 5.7 | 80.5 |

(continued)

| | Initial efficiency (F.C.E, %) | Initial discharge capacity (mAh/g) | Chargin g rate (%) | DC-iR (mΩ) | Long-term cycle-life characteristics @300 cyc (%) |
|---|---|---|---|---|---|
| Example 4 | 90.3 | 336 | 43 | 5.0 | 88.7 |
| Example 5 | 91.2 | 340 | 30 | 6.6 | 70.2 |
| Example 6 | 91.0 | 338 | 34 | 6.3 | 72.3 |
| Example 7 | 89.6 | 365 | 36 | 5.5 | 82.3 |
| Example 8 | 88.8 | 380 | 40 | 5.2 | 84.8 |
| Comparative Example 1 | 92.0 | 344 | 28 | 6.3 | 68.2 |
| Comparative Example 2 | 93.2 | 355 | 22 | 7.5 | 62.2 |
| Comparative Example 3 | 93.0 | 348 | 18 | 8.2 | 56.3 |

Referring to Table 3, the rechargeable lithium battery cells of Examples 1 to 8 exhibited initial discharge capacity of 330 mAh/g to 380 mAh/g, a charging rate of 30% to 43%, and DC-iR of 5 mΩ to 7 mΩ and maintained 70% or more of the initial capacity, when the 300 cycles were performed. The rechargeable lithium battery cells of Examples 1 to 8, compared with the rechargeable lithium battery cells of Comparative Examples 1 to 3, a sharp drop in an initial cycle-life was prevented, and they exhibited a significant increase in charging rate and cycle-life. Such effects were caused by components constituting the negative electrode active material composite of embodiments and a combined structure thereof.

The charging rate and the cycle-life of a rechargeable lithium battery cell may be affected or controlled by a mixing ratio of the components constituting negative electrode active material composite of some example embodiments, addition of a silicon negative electrode active material, and the like.

By way of summary and review, compared to the carbon negative electrode active material, the non-carbon negative electrode active material may exhibit a significant volume change due to charging and discharging, which could cause the conductive network of the negative electrode to be cut off early, or initial cycle-life of the rechargeable lithium battery to drastically be reduced or long-term cycle-life to be shortened.

One or more embodiments may provide a negative electrode active material composite capable of simultaneously securing initial discharge capacity, charging rate, long-term cycle-life, and the like, while protecting against a sharp drop in an initial cycle-life of a rechargeable lithium battery.

The negative electrode active material composite of some example embodiments may implement a rechargeable lithium battery that exhibits excellent initial discharge capacity, charging rate, and long-term cycle-life while preventing a sharp drop in an initial cycle-life.

Example embodiments have been disclosed herein, and although specific terms are employed, they are used and are to be interpreted in a generic and descriptive sense only and not for purposes of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

The present invention may be defined by reference to the following clauses:

Clause 1. A negative electrode active material composite, comprising:

secondary particles in which artificial graphite primary particles are assembled; and
a conductive material in internal gaps of the secondary particles,
wherein at least some of the artificial graphite primary particles include an amorphous carbon coating layer on a surface thereof.

Clause 2. The negative electrode active material composite of clause 1, wherein the negative electrode active material composite is manufactured by:

assembling artificial graphite primary particles in the presence of a conductive material and an amorphous carbon precursor, and
forming the amorphous carbon coating layer from the amorphous carbon precursor.

Clause 3. The negative electrode active material composite of clause 1 or clause 2, wherein the negative electrode active material composite has a theoretical capacity of about 330 mAh/g to about 400 mAh/g.

Clause 4. The negative electrode active material composite of any one of clauses 1 to 3, wherein the negative electrode active material composite has an interplanar spacing of the (002) plane of about 3.35 Å to about 3.8 Å, when measured by XRD.

Clause 5. The negative electrode active material composite of any one of clauses 1 to 4, wherein the negative electrode active material composite has a tap density of about 0.7 g/cc to about 1.5 g/cc.

Clause 6. The negative electrode active material composite of any one of clauses 1 to 5, wherein the negative electrode active material composite has a pellet density of about 1.35 g/cc to about 2.0 g/cc, after press molding under a pressure of 2 tons.

Clause 7. The negative electrode active material composite of any one of clauses 1 to 6, wherein the negative electrode active material composite has an average particle diameter ($D_{50}$) of about 5 $\mu$m to about 50 $\mu$m.

Clause 8. The negative electrode active material composite of any one of clauses 1 to 7, wherein the artificial graphite primary particles are prepared from a petroleum raw material, a coal raw material, a resin raw material, or a combination thereof.

Clause 9. The negative electrode active material composite of any one of clauses 1 to 8, wherein the conductive material includes carbon nanotubes (CNT), graphene, denka black, ketjen black, acetylene black, carbon black, or a mixture thereof.

Clause 10. The negative electrode active material composite of any one of clauses 1 to 9, wherein the amorphous carbon coating layer includes soft carbon, hard carbon, a mesophase pitch carbonized product, calcined coke, or a combination thereof.

Clause 11. The negative electrode active material composite of any one of clauses 1 to 10, wherein the negative electrode active material composite includes:

greater than about 0 wt% and less than or equal to about 0.5 wt% of the conductive material, and
greater than about 0 wt% and less than or equal to about 5 wt% of the amorphous carbon coating layer, all wt% being based on a total weight of the negative electrode active material composite.

Clause 12. The negative electrode active material composite of any one of clauses 1 to 11, further comprising a silicon negative electrode active material.

Clause 13. The negative electrode active material composite of clause 12, wherein the silicon negative electrode active material is included in an amount of greater than about 0 wt% and less than or equal to about 30 wt%, based on a total weight of the negative electrode active material composite.

Clause 14. A method for manufacturing a negative electrode active material composite, the method comprising:

assembling artificial graphite primary particles in the presence of a conductive material and an amorphous carbon precursor to obtain a product; and
carbonizing the product.

Clause 15. The method of clause 14, further comprising manufacturing the artificial graphite primary particles prior to assembling the artificial graphite primary particles, wherein the artificial graphite primary particles are manufactured

by heat treatment of a petroleum raw material, a coal raw material, a resin raw material, or a combination thereof.

Clause 16. The method of clause 14 or clause 15, wherein assembling the artificial graphite primary particles is performed at a temperature of about 100 °C to about 500 °C.

Clause 17. The method of any one of clauses 14 to 16, wherein the carbonizing is performed at a temperature of about 800 °C to about 1,400 °C.

Clause 18. A negative electrode for a rechargeable lithium battery, the negative electrode comprising:

a current collector; and
a negative electrode active material layer on the current collector,
wherein the negative electrode active material layer includes the negative electrode active material composite of any one of clauses 1 to 13.

Clause 19. The negative electrode of clause 18, wherein the negative electrode active material layer further includes a conductive material, binder, a negative electrode active material that is different from the negative electrode active material composite, or a combination thereof.

Clause 20. A rechargeable lithium battery, comprising:

the negative electrode of clause 18 or clause 19;
a positive electrode; and
an electrolyte.

## Claims

**1.** A negative electrode active material composite, comprising:

secondary particles in which artificial graphite primary particles are assembled; and
a conductive material in internal gaps of the secondary particles,
wherein at least some of the artificial graphite primary particles include an amorphous carbon coating layer on a surface thereof.

**2.** The negative electrode active material composite as claimed in claim 1, wherein the negative electrode active material composite is manufactured by:

assembling artificial graphite primary particles in the presence of a conductive material and an amorphous carbon precursor, and
forming the amorphous carbon coating layer from the amorphous carbon precursor.

**3.** The negative electrode active material composite as claimed in claim 1 or claim 2, wherein the negative electrode active material composite has a theoretical capacity of about 330 mAh/g to about 400 mAh/g.

**4.** The negative electrode active material composite as claimed in any one of claims 1 to 3, wherein the negative electrode active material composite has an interplanar spacing of the (002) plane of about 3.35 Å to about 3.8 Å, when measured by XRD.

**5.** The negative electrode active material composite as claimed in any one of claims 1 to 4, wherein the negative electrode active material composite has a tap density of about 0.7 g/cc to about 1.5 g/cc.

**6.** The negative electrode active material composite as claimed in any one of claims 1 to 5, wherein the negative electrode active material composite has a pellet density of about 1.35 g/cc to about 2.0 g/cc, after press molding under a pressure of 2 tons.

**7.** The negative electrode active material composite as claimed in any one of claims 1 to 6, wherein the negative electrode active material composite has an average particle diameter ($D_{50}$) of about 5 μm to about 50 μm.

8. The negative electrode active material composite as claimed in any one of claims 1 to 7, wherein the artificial graphite primary particles are prepared from a petroleum raw material, a coal raw material, a resin raw material, or a combination thereof.

9. The negative electrode active material composite as claimed in any one of claims 1 to 8, wherein the conductive material includes carbon nanotubes (CNT), graphene, denka black, ketjen black, acetylene black, carbon black, or a mixture thereof.

10. The negative electrode active material composite as claimed in any one of claims 1 to 9, wherein the amorphous carbon coating layer includes soft carbon, hard carbon, a mesophase pitch carbonized product, calcined coke, or a combination thereof.

11. The negative electrode active material composite as claimed in any one of claims 1 to 10, wherein the negative electrode active material composite includes:

greater than about 0 wt% and less than or equal to about 0.5 wt% of the conductive material, and/or
greater than about 0 wt% and less than or equal to about 5 wt% of the amorphous carbon coating layer, all wt% being based on a total weight of the negative electrode active material composite.

12. The negative electrode active material composite as claimed in any one of claims 1 to 11, further comprising a silicon negative electrode active material;
optionally wherein the silicon negative electrode active material is included in an amount of greater than about 0 wt% and less than or equal to about 30 wt%, based on a total weight of the negative electrode active material composite.

13. A method for manufacturing a negative electrode active material composite, the method comprising:

assembling artificial graphite primary particles in the presence of a conductive material and an amorphous carbon precursor to obtain a product; and
carbonizing the product;
optionally wherein:

(i) the method further comprises manufacturing the artificial graphite primary particles prior to assembling the artificial graphite primary particles, wherein the artificial graphite primary particles are manufactured by heat treatment of a petroleum raw material, a coal raw material, a resin raw material, or a combination thereof; and/or
(ii) assembling the artificial graphite primary particles is performed at a temperature of about 100 °C to about 500 °C; and/or
(iii) the carbonizing is performed at a temperature of about 800 °C to about 1,400 °C.

14. A negative electrode for a rechargeable lithium battery, the negative electrode comprising:

a current collector; and
a negative electrode active material layer on the current collector,
wherein the negative electrode active material layer includes the negative electrode active material composite as claimed in any one of claims 1 to 12;
optionally wherein the negative electrode active material layer further includes a conductive material, binder, a negative electrode active material that is different from the negative electrode active material composite, or a combination thereof.

15. A rechargeable lithium battery, comprising:

the negative electrode as claimed in claim 14;
a positive electrode; and
an electrolyte.

FIG. 1

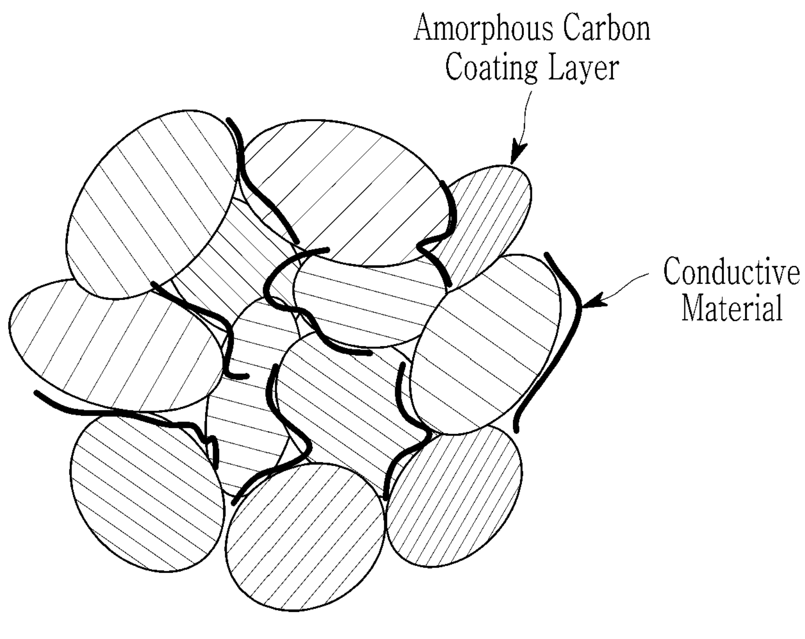

FIG. 2

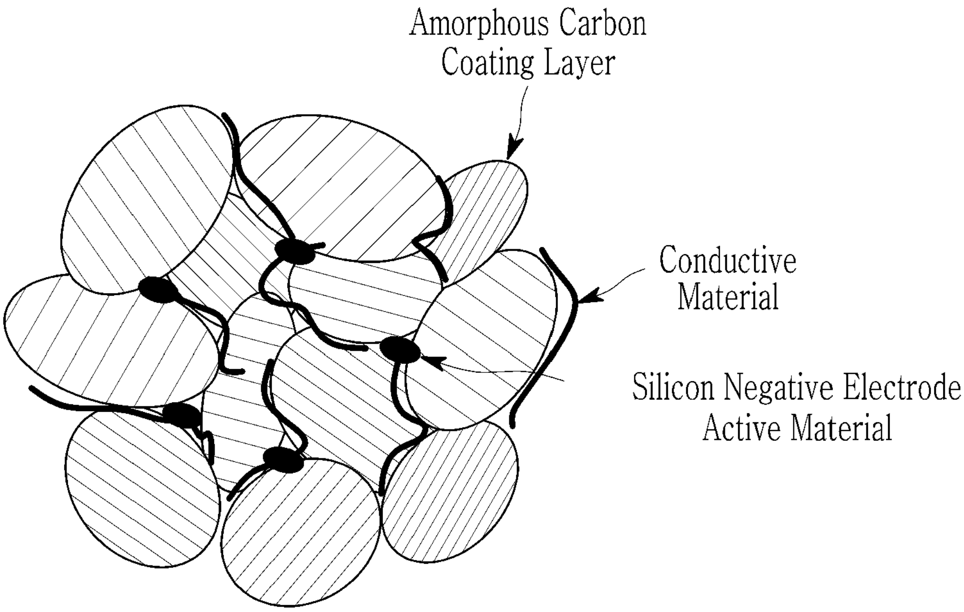
Amorphous Carbon
Coating Layer
Conductive
Material
Silicon Negative Electrode
Active Material

FIG. 3

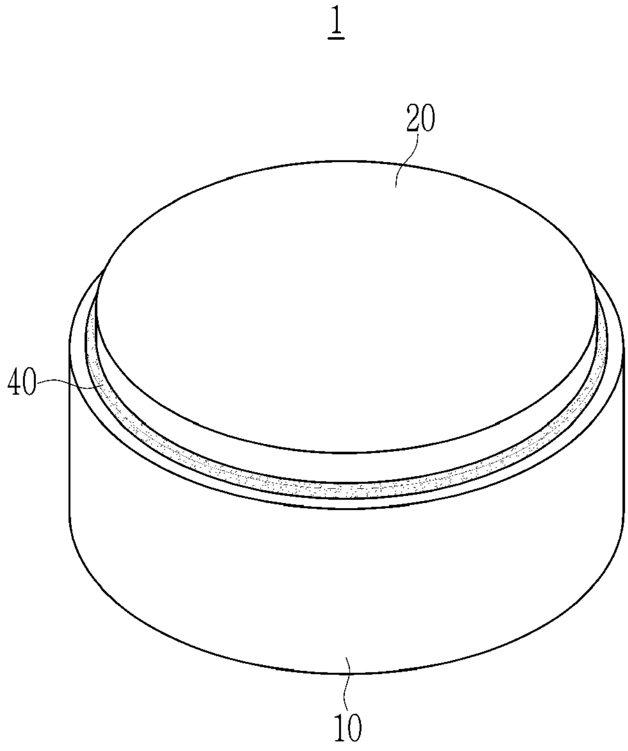

FIG. 4

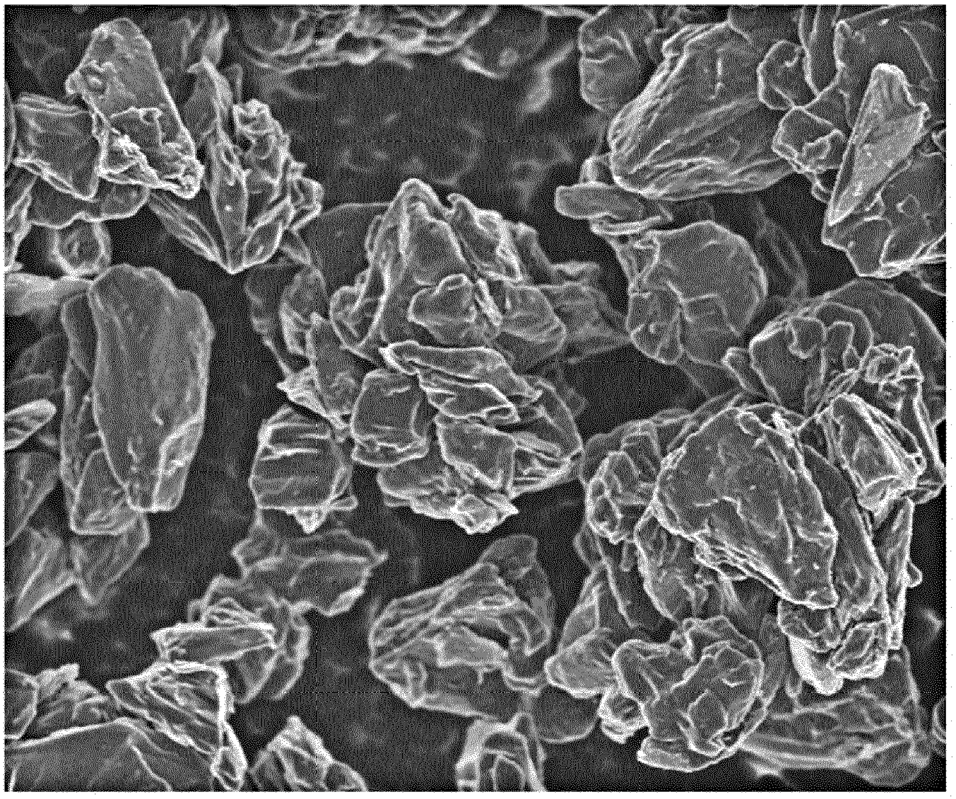

FIG. 5

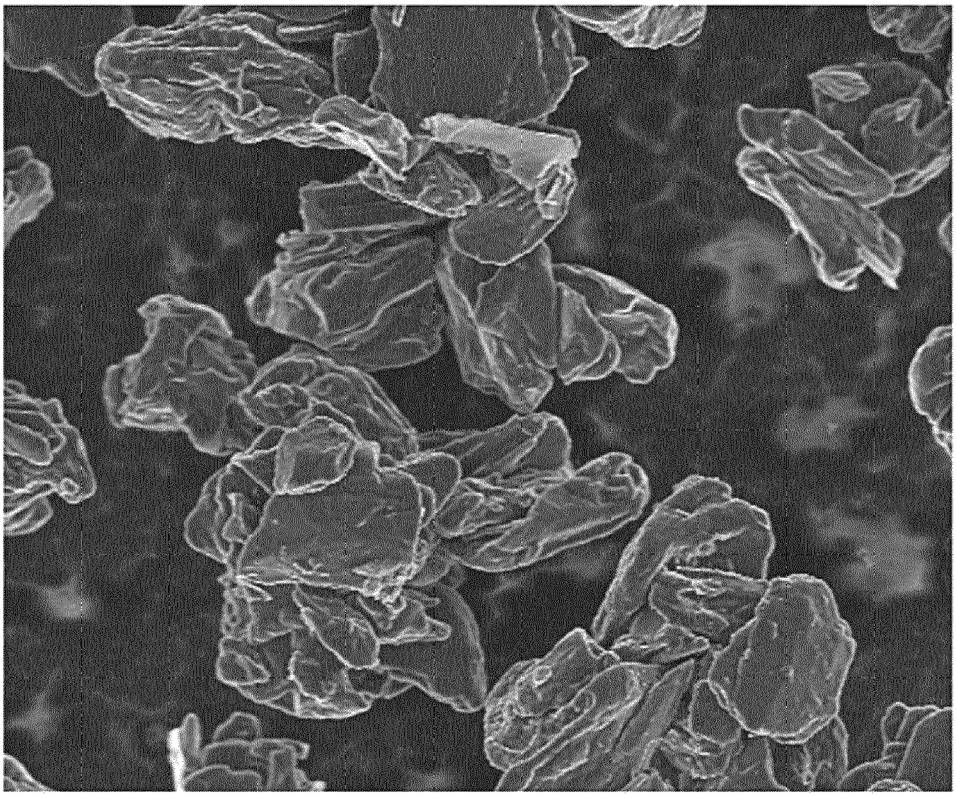

FIG. 6

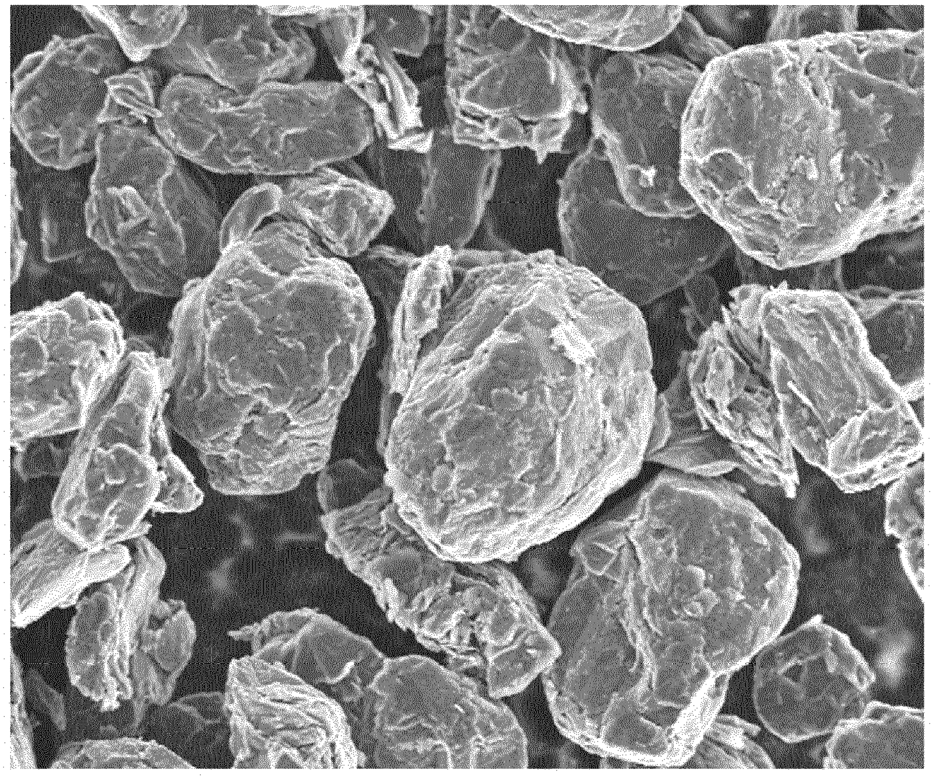

FIG. 7

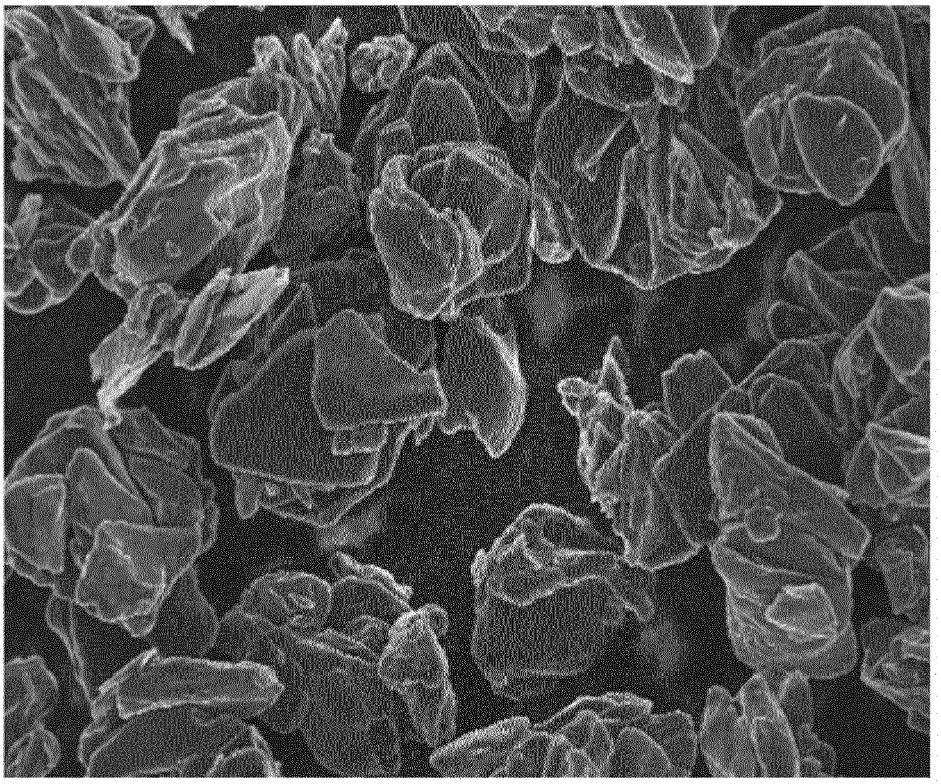

Europäisches Patentamt
European Patent Office
Office européen des brevets

# EUROPEAN SEARCH REPORT

Application Number
EP 23 21 9763

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2019/198857 A1 (OH SEYOUNG [KR] ET AL) 27 June 2019 (2019-06-27)<br>* figure 5; example 1 *<br>----- | 1-8,10, 11,14,15<br>9 | INV.<br>H01M4/36<br>H01M4/587<br>H01M4/62 |
| X | EP 2 387 089 A1 (SAMSUNG SDI CO LTD [KR]) 16 November 2011 (2011-11-16)<br>* paragraphs [0005], [0040], [0052], [0064] - [0066]; figure 1 *<br>----- | 1,2,4,8, 10,12-15 | |

TECHNICAL FIELDS SEARCHED (IPC)

H01M

The present search report has been drawn up for all claims

1

| Place of search | Date of completion of the search | Examiner |
|---|---|---|
| Munich | 22 July 2024 | Meini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 21 9763

This annex lists the patent family members relating to the patent documents cited in the above-mentioned European search report. The members are as contained in the European Patent Office EDP file on
The European Patent Office is in no way liable for these particulars which are merely given for the purpose of information.

22-07-2024

| Patent document cited in search report | Publication date | Patent family member(s) | Publication date |
|---|---|---|---|
| US 2019198857 A1 | 27-06-2019 | CN 109962213 A | 02-07-2019 |
| | | EP 3503267 A1 | 26-06-2019 |
| | | KR 20190076706 A | 02-07-2019 |
| | | US 2019198857 A1 | 27-06-2019 |
| EP 2387089 A1 | 16-11-2011 | CN 102244251 A | 16-11-2011 |
| | | EP 2387089 A1 | 16-11-2011 |
| | | JP 5561867 B2 | 30-07-2014 |
| | | JP 2011243571 A | 01-12-2011 |
| | | KR 20110126055 A | 22-11-2011 |
| | | US 2011281180 A1 | 17-11-2011 |

EPO FORM P0459

For more details about this annex : see Official Journal of the European Patent Office, No. 12/82